# EUROPEAN PATENT APPLICATION

(11) **EP 4 446 702 A1**
(43) Date of publication of application: **16.10.2024**
(21) Application number: 22904666.9
(22) Date of filing: 07.12.2022
(51) Int. Cl.: G01C 21/16, G01C 21/28, G01S 19/40, G01S 13/06, G01S 17/06

(54) **POSITIONING DEVICE AND POSITIONING METHOD**

(30) Priority: 08.12.2021 KR 20210174559
(71) Applicant: LG INNOTEK CO., LTD., Seoul 07796 (KR)
(72) Inventor: JO, Sang Uk, Seoul 07796 (KR)
(74) Representative: DREISS Patentanwälte PartG mbB
(86) International application number: PCT/KR2022/019838
(87) International publication number: WO 2023/106837

(57) **Abstract**

A positioning device according to one embodiment of the present invention comprises: a communication unit for receiving, from an external device, a position information message including position information about the external device; a first positioning unit for generating first positioning information including global navigation satellite system (GNSS) coordinate information and/or information about distance to the external device; and a second positioning unit for generating second positioning information by using the position information message of the external device and the first positioning information, wherein the position information message is a broadcast message, and the position information about the external device is real time kinematics (RTK) positioning information obtained by correcting GNSS coordinates of the external device through an RTK correction signal.

## Description

### [Technical Field]

The present invention relates to a positioning device and a positioning method, and more specifically, to a positioning device and a positioning method using vehicle-to-everything (V2X) communication.

### [Background Art]

As information and communication technology and automobile technology develop, interest in autonomous vehicles is increasing. Generally, an autonomous vehicle is a car that is equipped with advanced driver-assistance system (ADAS) technology, route navigation technology, vehicle-to-everything (V2X) communication technology, etc., using sensors such as cameras, radars, lidars, and the like to acquire and recognize information about the surrounding environment, and drives itself to its destinations.

For commercialization of autonomous vehicles, more precise positioning accuracy is required. Positioning devices mounted on autonomous vehicles may perform positioning on the basis of a global navigation satellite system (GNSS), but there is a problem with a large error range.

In order to solve the above problem, positioning devices mounted on autonomous vehicles may be equipped with high-precision positioning clients, but high-precision positioning clients are expensive, which can be a major factor in delaying the commercialization of autonomous vehicles.

### [Disclosure]

### [Technical Problem]

The technical problem to be achieved by the present invention is to provide a positioning device and a positioning method capable of high-precision positioning.

### [Technical Solution]

A positioning device according to one embodiment of the present invention includes a communication unit configured to receive a position information message including position information of an external device from the external device; a first positioning unit configured to generate first positioning information including at least one of global navigation satellite system (GNSS) coordinate information and information about a distance to the external device; and a second positioning unit configured to generate second positioning information using the position information of the external device message and the first positioning information, wherein the position information message is a broadcast message, and the position information of the external device includes real time kinematics (RTK) positioning information obtained by correcting GNSS coordinates of the external device with an RTK correction signal.

The communication unit may be a vehicle-to-everything (V2X) communication module.

The communication unit may be a cellular V2X (C-V2X) module supporting cellular-based V2X communication, a dedicated short-range communication (DSRC) module supporting wireless access in vehicular environments (WAVE)-based V2X communication, or a hybrid module supporting both C-V2X and WAVE.

The first positioning information may further include azimuth information of a moving object on which the positioning device is mounted.

The positioning device may not include an RTK client.

The external device may be mounted on a first moving object, the positioning device may be mounted on a second moving object, the position information message may further include at least one of identification information of the first moving object, speed information of the first moving object, and generation time information of the position information, and the second positioning unit may further use at least one of the identification information of the first moving object, the speed information of the first moving object, the generation time information of the position information, and speed information of the second moving object to generate the second positioning information.

The communication unit may transmit the position information message to another external device mounted on a third moving object.

The second positioning unit may generate a positioning information message including at least one of the second positioning information, identification information of the second moving object, speed information of the second moving object, and generation time information of the second positioning information, and the communication unit may transmit the positioning information message to another external device mounted on a third moving obj ect.

The third moving object may not include an RTK client.

The first moving object may be a lead vehicle among a plurality of vehicles traveling in a platoon, the second moving object may be a vehicle that follows the first moving object, and the third moving object may be a vehicle that follows the second moving obj ect.

The external device may be a roadside unit.

The first positioning unit may include at least one of a lidar sensor and a radar sensor that detect a distance to the external device.

A positioning method of a positioning system according to one embodiment of the present invention, which includes: transmitting, by a first device, a position information message including RTK positioning information obtained by correcting GNSS coordinates of the first device with an RTK correction signal; receiving, by a second device, the position information message from the first device; generating, by the second device, first positioning information including at least one of GNSS coordinate information of the second device and information about a distance to the first device; and generating, by the second device, second positioning information of the second device using the position information message and the first positioning information.

The positioning method may further include transmitting, by the second device, the position information message to a third device.

The positioning method may further include: generating, by the second device, a positioning information message including the second positioning information of the second device; and transmitting, by the second device, the positioning information message to a third device.

The first device may be mounted on a first moving object, the second device may be mounted on a second moving object, the third device may be mounted on a third moving object, the first device may pre-store identification information of the second moving object and identification information of the third moving object, the second device may pre-store identification information of the first moving object and the identification information of the third moving object, the third device may pre-store the identification information of the first moving object and the identification information of the second moving object, and the first moving object, the second moving object, and the third moving object may move together at intervals within a predetermined distance.

### [Advantageous Effects]

According to one embodiment of the present invention, it is possible to provide high-precision positioning, for example, positioning accuracy of 10 cm or less. A positioning device according to one embodiment of the present invention can provide high-precision positioning in real time without a high-cost client.

According to one embodiment of the present invention, it is possible to perform high-precision positioning using information received from other vehicles traveling together within a predetermined distance.

### [Description of Drawings]

FIG. 1 is a conceptual diagram of a positioning system according to one embodiment of the present invention.
FIG. 2 is a block diagram of the positioning system according to one embodiment of the present invention.
FIG. 3 is a block diagram of a positioning device included in the positioning system according to one embodiment of the present invention.
FIGS. 4 and 5 are conceptual diagrams of a positioning system according to another embodiment of the present invention.
FIG. 6 is a block diagram of the positioning system according to another embodiment of the present invention.
FIGS. 7 and 8 are flowcharts of a positioning method of the positioning system according to another embodiment of the present invention.

### [Modes of the Invention]

Hereinafter, exemplary embodiments of the present invention will be described in detail with reference to the accompanying drawings.

However, it should be understood that the technical spirit of the present invention is not limited to embodiments to be disclosed below but may be implemented in many different forms. It should be understood that within the scope of the present invention, one or more elements of each of the embodiments may be selectively combined and substituted.

In addition, terms (including technical and scientific terms) used in the embodiments of the present invention have the same meanings as commonly understood by one of ordinary skill in the art to which the present invention belongs. It should be further understood that terms, such as those defined in commonly used dictionaries, should be interpreted as having meanings that are consistent with their meanings in the context of the related art.

Further, the terms used in the embodiments of the present invention are provided only to describe embodiments of the present invention and not for purposes of limitation.

In this specification, the singular forms include the plural forms unless the context clearly indicates otherwise, and the phrase "at least one element (or one or more elements) of an element A, an element B, and an element C," should be understood as including the meaning of at least one of all combinations being obtained by combining the element A, the element B, and the element C.

Further, in describing elements of the present invention, terminologies such as "first," "second," "A," "B," "(a)," and "(b)" may be used.

These terms are used to distinguish an element from another element but a nature, an order, or a sequence of the elements is not limited by the terminology.

It will be understood that when an element is referred to as being "connected" or "coupled" to another element, it can be directly connected or coupled to another element, intervening elements may be present, or it can be connected or coupled to another element through still another element.

Further, when an element is described as being formed "on (above)" or "under (below)" another element, the term "on (above)" or "under (below)" includes both of a case in which the two elements are in direct contact with each other or a case in which one or more elements are (indirectly) disposed between the two elements. In addition, the term "on (above)" or "under (below)" includes a case in which one element is disposed in an upward direction or a downward direction with respect to the other element.

Hereinafter, embodiments will be described in detail with reference to the accompanying drawings, the same or corresponding components are denoted by the same reference numerals regardless of reference numbers, and thus the description thereof will not be repeated.

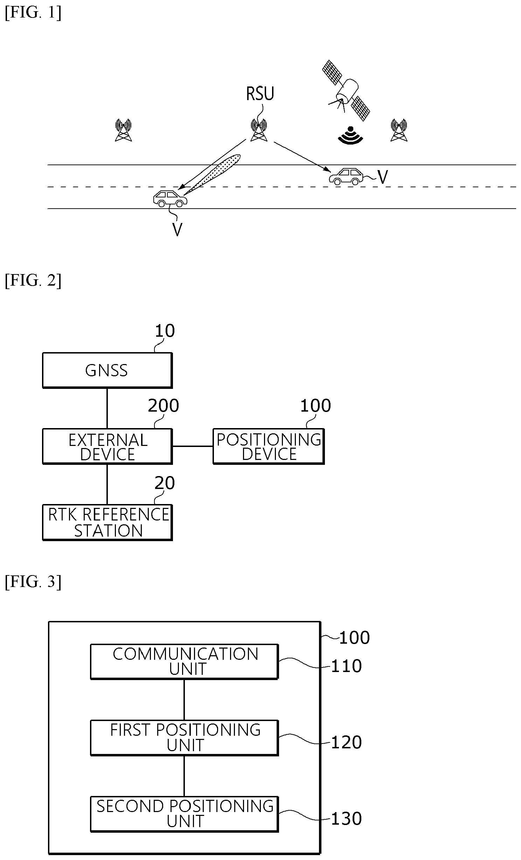

FIG. 1 is a conceptual diagram of a positioning system according to one embodiment of the present invention, FIG. 2 is a block diagram of the positioning system according to one embodiment of the present invention, and FIG. 3 is a block diagram of a positioning device included in the positioning system according to one embodiment of the present invention.

Referring to FIGS. 1 to 3, the positioning system according to one embodiment of the present invention includes a positioning device 100 and an external device 200. The positioning device 100 and the external device 200 perform vehicle-to-everything (V2X) communication, and the positioning device 100 performs positioning using results of communication with the external device 200. As illustrated in FIG. 1, the positioning device 100 may be mounted on a moving object V such as a vehicle or the like to perform positioning of the moving object, and the external device 200 may be a roadside unit (RSU).

The external device 200 obtains global navigation satellite system (GNSS) coordinate information of the external device 200 using signals received from a GNSS 10. The GNSS coordinate information may include latitude information, longitude information, altitude information, and the like. To this end, the external device 200 may include a GNSS receiver for receiving GNSS signals. Generally, an error range of GNSS coordinate information may be tens of centimeters or more, or several meters or more, due to distortion of GNSS signals as they pass through the atmosphere, distortion due to multiple paths between the GNSS 10 and the external device 200, etc.

The external device 200 according to the embodiment of the present invention obtains position information of the external device 200 by correcting errors in the GNSS coordinate information and generates a position information message including the position information of the external device 200.

To this end, the external device 200 is equipped with a real time kinematics (RTK) client and receives an RTK correction signal from an RTK reference station 20. The RTK reference station 20 is a base station that already knows precise position values such as latitude, longitude, altitude, etc., and may be, for example, a satellite reference point. The RTK reference station 20 is installed in advance in a region in which distortion of GNSS signals can be minimized, and transmits generates and transmits in real time an RTK correction signal with distortion removed. The RTK correction signal may be generated using a virtual reference station (VRS) technique, a Flachen Korrektur parameter (FKP) technique, etc. The RTK reference station 20 has its own precise position information measured in advance, and generates an RTK correction signal by calculating an error included in position information generated from the GNSS signal on the basis of the position information generated from the GNSS signal and the precise position information measured in advance. The RTK correction signal is configured in the Radio Technical Commission for Maritime (RTCM) format and may be transmitted using various wireless communication methods such as the networked transport of RTCM via Internet protocol (NTRIP), digital multimedia broadcasting (DMB), etc.

When the RTK reference station 20 transmits the RTK correction signal, the external device 200, which is located near the RTK reference station 20 and equipped with the RTK client, receives the RTK correction signal.

The external device 200 generates position information by correcting GNSS coordinates with the RTK correction signal. In this specification, the position information obtained by correcting the GNSS coordinates with the RTK correction signal may be referred to as RTK positioning information. The RTK positioning information may have higher precision than the GNSS coordinates, and an error range thereof may be within several centimeters.

According to the embodiment of the present invention, the external device 200 generates and broadcasts a position information message in real time, and the positioning device 100 performs positioning using the position information message received from the external device 200.

Referring to FIG. 3, the positioning device 100 according to one embodiment of the present invention includes a communication unit 110, a first positioning unit 120, and a second positioning unit 130.

Since the positioning device 100 can be mounted on the moving object V such as a vehicle or the like, the communication unit 110 may be a V2X communication module. The V2X communication module may be a cellular V2X (C-V2X) module supporting cellular-based V2X communication, a dedicated short-range communication (DSRC) module supporting wireless access in vehicular environments (WAVE)-based V2X communication, or a hybrid module supporting both C-V2X and WAVE. The V2X communication module is capable of not only vehicle-to-vehicle (V2V) communication supporting communication between vehicles, but also vehicle-to-infrastructure (V2I) communication supporting communication between vehicles and infrastructure.

The communication unit 110 receives the position information message broadcast by the external device 200. Since the communication unit 110 is a V2X communication module, the communication unit 110 may receive the position information message from the external device 200 without being limited to the type of the external device 200.

According to the embodiment of the present invention, the first positioning unit 120 of the positioning device 100 generates first positioning information, and the second positioning unit 130 generates second positioning information.

Here, the first positioning information may be GNSS coordinate information of the positioning device 100. To this end, the first positioning unit 120 may be a GNSS receiver. Alternatively, the first positioning information may be information about a distance between the positioning device 100 and the external device 200. To this end, the first positioning unit 120 may be a radar sensor or a lidar sensor. The radar sensor or the lidar sensor may measure the distance between the positioning device 100 and the external device 200 on the basis of a time it takes for light output from a light source to return after being reflected by the external device 200. Alternatively, the first positioning information may include both the GNSS coordinate information and the information about the distance between the positioning device 100 and the external device 200. Alternatively, the first positioning information may further include azimuth information of the moving object V on which the positioning device 100 is mounted.

The second positioning information is generated using the position information message of the external device 200 and the first positioning information.

When the first positioning information is the GNSS coordinate information of the positioning device 100, the second positioning unit 130 may generate the second positioning information of the positioning device 100 using the position information of the external device 200 included in the position information message of the external device 200 and the GNSS coordinate information of the positioning device 100. To this end, the position information message of the external device 200 may include GNSS coordinates of the external device 200 together with the RTK positioning information obtained by correcting the GNSS coordinates of the external device 200 with the RTK correction signal. Accordingly, the second positioning unit 130 may obtain the second positioning information that is more precise than the first positioning information by estimating an error of the GNSS signal using the RTK positioning information and the GNSS coordinates of the external device 200 received from the external device 200 and removing the estimated error of the GNSS signal from the first positioning information, which is the GNSS coordinate information of the positioning device 100.

When the first positioning information is the information about the distance between the positioning device 100 and the external device 200, the second positioning unit 130 may generate the second positioning information of the positioning device 100 using the position information of the external device 200 included in the position information message of the external device 200 and the information about the distance between the positioning device 100 and the external device 200. Since the position information of the external device 200 included in the position information message of the external device 200 is the RTK positioning information obtained by correcting the GNSS coordinates with the RTK correction signal, the position information of the external device 200 is high-precision position information with an error range of within several centimeters. When the second positioning information of the positioning device 100 is generated using the information about the distance between the positioning device 100 and the external device 200 on the basis of the position information of the external device 200, which is high-precision position information, positioning information that is more precise than the GNSS coordinates of the positioning device 100 may be obtained.

When the positioning device 100 or the moving object on which the positioning device 100 is mounted includes a radar sensor or a lidar sensor, the first positioning information may be the information about the distance between the positioning device 100 and the external device 200. When the positioning device 100 or the moving object on which the positioning device 100 is mounted does not include a radar sensor or a lidar sensor, the first positioning information may be the GNSS coordinates of the positioning device 100. Accordingly, the positioning device 100 according to the embodiment of the present invention may be applied to positioning of a moving object that does not include a radar sensor or a lidar sensor, as well as a moving object that includes a radar sensor or a lidar sensor.

According to the embodiment of the present invention, as illustrated in FIG. 1, the external device 200 may be an RSU. When the RSU includes an RTK client together with a GNSS receiver and a V2X communication module, the RSU may generate and broadcast a position information message according to the embodiment of the present invention in real time, and a moving object such as a vehicle or the like passing near the RSU may perform high-precision positioning using the position information message received from the RSU.

According to another embodiment of the present invention, the external device 200 may be a moving object such as a vehicle or the like.

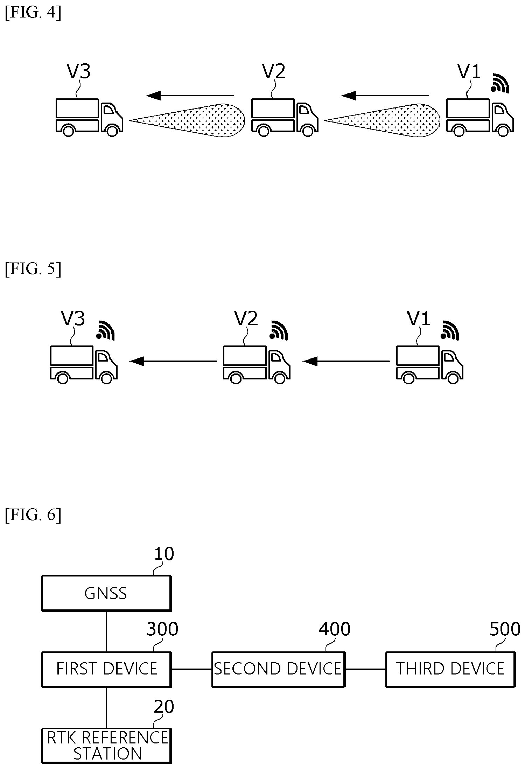

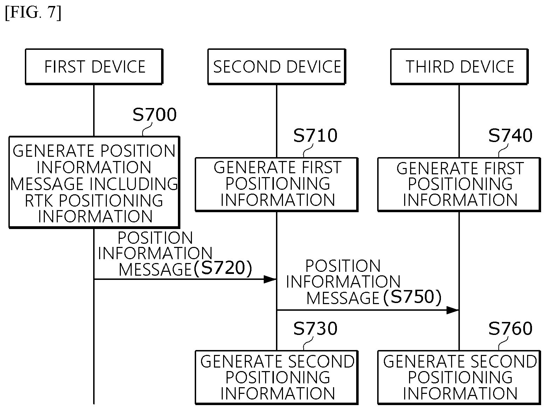

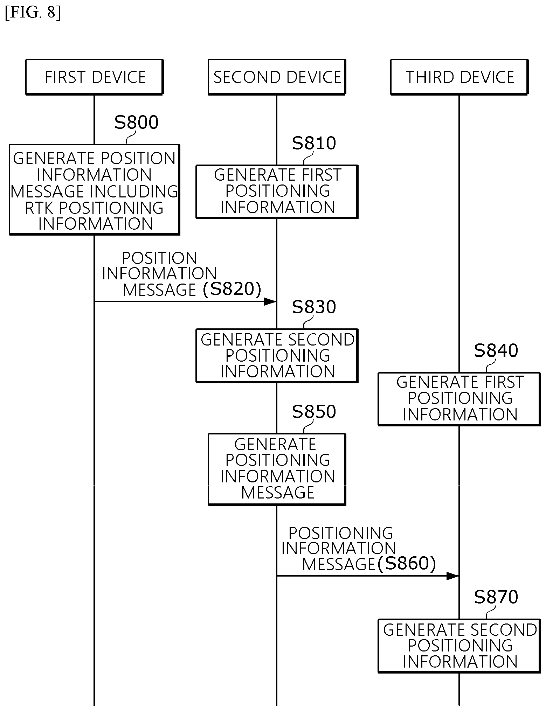

FIGS. 4 and 5 are conceptual diagrams of a positioning system according to another embodiment of the present invention, FIG. 6 is a block diagram of the positioning system according to another embodiment of the present invention, and FIGS. 7 and 8 are flowcharts of a positioning method of the positioning system according to another embodiment of the present invention.

Referring to FIGS. 4 to 6, the positioning system 20 according to another embodiment of the present invention includes a first device 300 and a second device 400. The first device 300 and the second device 400 may be mounted on a first moving object and a second moving object, respectively. The first device 300 and the second device 400 may each be a positioning device mounted on an autonomous vehicle, and the first device 300 and the second device 400 may perform V2X communication.

Here, an example in which the first device 300 is a positioning device that includes an RTK client and is capable of high-precision positioning on its own and the second device 400 is a positioning device that does not include an RTK client will be described. Among the content described with reference to FIGS. 1 to 3, the description of the external device 200 may be applied to the description of the first device 300, and the description of the positioning device 100 may be applied to the description of the second device 400. For convenience of description, description of the same content described in FIGS. 1 to 3 will not be repeated.

The first device 300 obtains GNSS coordinate information of the first device 300 using a signal received from a GNSS 10, corrects the GNSS coordinate information using an RTK correction signal received from an RTK reference station 20, and generates position information, which is RTK positioning information. The first device 300 broadcasts a position information message including the position information, and the second device 400 positioned near the first device 300 receives the broadcast position information message from the first device 300.

As illustrated in FIG. 4, when the second device 400 includes a radar sensor or a lidar sensor, the second device 400 generates first positioning information, which is information about a distance between the first device 300 and the second device 400, and generates second positioning information that is more precise than the first positioning information using the position information message of the first device 300 and the information about the distance between the first device 300 and the second device 400, which is the first positioning information.

As illustrated in FIG. 5, when the second device 400 does not include a radar sensor or a lidar sensor, the second device 400 generates first positioning information, which is GNSS coordinates of the second device 400, and generates second positioning information that is more precise than the first positioning information using the position information message of the first device 300 and the GNSS coordinates of the second device 400, which is the first positioning information.

Meanwhile, when the first device 300 is mounted on the first moving object, the position information message transmitted by the first device 300 may further include identification information of a first moving object V1, and the second device 400 may further use the identification information of the first moving object V1 to generate the second positioning information.

For example, the identification information of the first moving object V1 may include a vehicle number of the first moving object V1. Since the vehicle number of the first moving object V1 is recognizable from the outside, the second device 400 may know that the device that has transmitted the position information message is the first device 300 by comparing the identification information of the first moving object V1 included in the position information message with the vehicle number of the first moving object V1 recognized by the second device 400. Alternatively, the identification information of the first moving object V1 may further include information about a vehicle type, a color, a size, a shape, etc. of the first moving object V1.

Meanwhile, when both the first device 300 and the second device 400 are moving objects, the position of the first device 300 may change in real time as the position information of the first device 300 is generated, and the position of the second device 400 may change in real time as the second positioning information of the second device 400 is generated. Accordingly, the position information message transmitted by the first device 300 may further include at least one of speed information of the first moving object V1 and generation time information of the position information, and the second device 400 may further use at least one of the speed information of the first moving object V1, the generation time information of the position information, and speed information of the second moving object V2 to generate the second positioning information. Accordingly, real-time positioning that reflects the position changes due to movements of the first device 300 and the second device 400 is possible.

Accordingly, high-precision positioning may be performed even when the second device 400 is not equipped with an expensive RTK client.

Meanwhile, the second device 400 may transmit the position information message received from the first device 300 to a third device 500 mounted on the third moving object V3 positioned near the second moving object V2. Alternatively, the second device 400 may generate a positioning information message of the second device 400 using the position information message received from the first device 300, and transmit the positioning information message of the second device 400 to the third device 500 mounted on the third moving object V3 positioned near the second moving object V2. Accordingly, the third device 500 that cannot directly receive the position information message of the first device 300 transmitted by the first device 300 and is not equipped with an RTK client may also perform high-precision positioning. The positioning method of the positioning system according to the embodiment of the present invention may also be applied to vehicles even when traveling in a platoon. Platoon traveling means that multiple autonomous vehicles move in a group.

More specifically, referring to FIGS. 7 and 8, the first device 300 transmits a position information message including RTK positioning information obtained by correcting the GNSS coordinates of the first device 300 with the RTK correction signal (S700 and S800).

Meanwhile, the second device 400 generates first positioning information (S710 and S810), and receives the position information message from the first device 300 (S720 and S820). As described above, when the second device 400 includes a radar sensor or a lidar sensor, the first positioning information may include the information about the distance between the first device 300 and the second device 400, and when the second device 400 does not include a radar sensor or a lidar sensor, the first positioning information may include the GNSS coordinate information of the second device 400.

The second device 400 generates second positioning information of the second device 400 using the first positioning information generated in operations S710 and S810 and the position information message of the first device 300 received in operations S720 and S820 (S730 and S830). The second positioning information may be positioning information that is more precise than the first positioning information. For example, the second positioning information may be positioning information with an error range of 10 cm or less.

Meanwhile, when multiple autonomous vehicles are traveling in a platoon, the second device 400 mounted on the second moving object V2 that follows the first moving object V1 may receive the position information message transmitted by the first device 300 mounted on the first moving object V1, which is a lead vehicle, but the third device 500 mounted on the third moving object V3 that follows the second moving object V2 may not be able to receive the position information message due to the distance from the first device 300 or communication failure caused by the second device 400. According to the embodiment of the present invention, the second device 400 may serve as a relay between the first device 300 and the third device 500.

To this end, referring to FIG. 7, the third device 500 generates first positioning information (S740). Here, the description of the first positioning information may be the same as the description of the first positioning information generated by the second device 400 in operation S710. When the third device 500 includes a radar sensor or a lidar sensor, the first positioning information may include information about a distance between the second device 400 and the third device 500. To this end, the third device 500 may pre-store identification information of the second moving object V2, and generate the first positioning information using information about a distance to a moving object corresponding to the pre-stored identification information among moving objects traveling within a recognizable range. Since the third device 500 is mounted on the third moving object V3 and its position changes in real time, the third device 500 may periodically generate the first positioning information.

Meanwhile, the second device 400 transmits the position information message received from the first device 300 to the third device 500 (S750). In this case, the second device 400 may further transmit the information about the distance between the first device 300 and the second device 400 together with the position information message received from the first device 300 to the third device 500.

Accordingly, the third device 500 generates second positioning information that is more precise than the first positioning information using the first positioning information generated in operation S740 and the position information message received in operation S750 (S760).

Alternatively, referring to FIG. 8, the third device 500 generates first positioning information (S840). Here, the description of the first positioning information may be the same as the description of the first positioning information generated by the second device 400 in operation S810. When the third device 500 includes a radar sensor or a lidar sensor, the first positioning information may include information about a distance between the second device 400 and the third device 500. To this end, the third device 500 may pre-store identification information of the second moving object V2, and generate the first positioning information using the information about the distance to a moving object corresponding to the pre-stored identification information among moving objects traveling within a recognizable range. Since the third device 500 is mounted on the third moving object V3 and its position changes in real time, the third device 500 may periodically generate the first positioning information.

Meanwhile, the second device 400 generates a positioning information message using the second positioning information generated in operation S830 (S850), and transmits the generated positioning information message to the third device 500 (S860). Here, the positioning information message may further include at least one of identification information of the second moving object V2, speed information of the second moving object V2, and generation time information of the second positioning information in addition to the second positioning information generated by the second device 400 in operation S830.

Then, the third device 500 generates second positioning information that is more precise than the first positioning information using the first positioning information generated in operation S840 and the positioning information message received in operation S860 (S870). When the positioning information message includes the identification information of the second moving object V2, the third device 500 may know that the device that has transmitted the positioning information message is the second device 400 by comparing the identification information of the second moving object V2 included in the positioning information message with the identification information of the second moving object V2 recognized by the third device 500. Further, when the positioning information message further includes at least one of the speed information of the second moving object V2 and the generation time information of the second positioning information, real-time positioning that reflects the position changes due to movements of the second device 400 and the third device 500 is possible.

Meanwhile, when the first moving object V1 on which the first device 300 is mounted, the second moving object V2 on which the second device 400 is mounted, and the third moving object V3 on which the third device 500 is mounted are traveling in a platoon, the first device 300, the second device 400, and the third device 500 may each pre-store identification information of the moving objects in a platoon, and the first moving object V1, the second moving object V2, and the third moving object V3 may move together at a constant interval within a predetermined distance from each other. Accordingly, data included in the position information message or positioning information message among the first device 300, the second device 400, and the third device 500 can be minimized, and the amount of computation performed in the first device 300, the second device 400, and the third device 500 can be minimized.

As described above, according to the embodiment of the present invention, even when only some vehicles are equipped with RTK clients when traveling in a platoon, remaining vehicles traveling together therewith can also perform positioning with high precision.

Terms described in the specification such as "unit" refer to software or a hardware component such as a field-programmable gate array (FPGA) or an Application-Specific Integrated Circuit (ASIC), and the unit performs certain functions. However, the "unit" is not limited to software or hardware. The "unit" may be configured in a storage medium that may be addressed or may be configured to be executed by at least one processor. Therefore, examples of the "unit" include components such as software components, object-oriented software components, class components and task components, and processes, functions, attributes, procedures, subroutines, segments of program codes, drivers, firmware, micro codes, circuits, data, databases, data structures, tables, arrays, and variables. Components and functions provided from "units" may be combined into a smaller number of components and "units" or may be further separated into additional components and "units." In addition, the components and the "units" may be implemented to play back one or more CPUs in a device or a secure multimedia card.

While exemplary embodiments of the present invention and their advantages have been described above in detail, it should be understood by those skilled in the art that various changes, substitutions and alterations may be made herein without departing from the scope of the invention as defined by the following claims.

## Claims

1. A positioning device comprising:
a communication unit configured to receive a position information message including position information of an external device from the external device;
a first positioning unit configured to generate first positioning information including at least one of global navigation satellite system (GNSS) coordinate information and information about a distance to the external device; and
a second positioning unit configured to generate second positioning information using the position information of the external device message and the first positioning information,
wherein the position information message is a broadcast message, and
the position information of the external device includes real time kinematics (RTK) positioning information obtained by correcting GNSS coordinates of the external device with an RTK correction signal.

2. The positioning device of claim 1, wherein the external device is mounted on a first moving object,
the positioning device is mounted on a second moving object,
the position information message further includes at least one of identification information of the first moving object, speed information of the first moving object, and generation time information of the position information, and
the second positioning unit further uses at least one of the identification information of the first moving object, the speed information of the first moving object, the generation time information of the position information, and speed information of the second moving object to generate the second positioning information.

3. The positioning device of claim 2, wherein the communication unit transmits the position information message to another external device mounted on a third moving object.

4. The positioning device of claim 2, wherein the second positioning unit generates a positioning information message including at least one of the second positioning information, identification information of the second moving object, speed information of the second moving object, and generation time information of the second positioning information, and
the communication unit transmits the positioning information message to another external device mounted on a third moving object.

5. The positioning device of claim 1, wherein the external device is a roadside unit.

6. The positioning device of claim 1, wherein the first positioning unit includes at least one of a lidar sensor and a radar sensor that detect a distance to the external device.

7. A positioning method of a positioning system, comprising:
transmitting, by a first device, a position information message including real time kinematics (RTK) positioning information obtained by correcting global navigation satellite system (GNSS) coordinates of the first device with an RTK correction signal;
receiving, by a second device, the position information message from the first device;
generating, by the second device, first positioning information including at least one of GNSS coordinate information of the second device and information about a distance to the first device; and
generating, by the second device, second positioning information of the second device using the position information message and the first positioning information.

8. The positioning method of claim 7, further comprising transmitting, by the second device, the position information message to a third device.

9. The positioning method of claim 7, further comprising:
generating, by the second device, a positioning information message including the second positioning information of the second device; and
transmitting, by the second device, the positioning information message to a third device.

10. The positioning method of claim 8 or 9, wherein the first device is mounted on a first moving object,
the second device is mounted on a second moving object,
the third device is mounted on a third moving object,
the first device pre-stores identification information of the second moving object and identification information of the third moving object,
the second device pre-stores identification information of the first moving object and the identification information of the third moving object,
the third device pre-stores the identification information of the first moving object and the identification information of the second moving object, and
the first moving object, the second moving object, and the third moving object move together at intervals within a predetermined distance.
